# EUROPEAN PATENT SPECIFICATION

(11) **EP 1 273 556 B1**
(45) Date of publication and mention of the grant of the patent: **26.04.2006**
(21) Application number: 00985276.5
(22) Date of filing: 27.12.2000
(51) Int. Cl.: C02F 3/04

(54) **SYMBIOTIC RESIDUAL WATER TREATMENT STATION**
SYMBIOTISCHE RÜCKSTANDSWASSERAUFBEREITUNGSANLAGE
STATION D'EPURATION SYMBIOTIQUE D'EAUX RESIDUELLES

(30) Priority: 19.01.2000 ES 200000186
(43) Date of publication of application: 08.01.2003
(73) Proprietor: Fabregas Gonzalez, Luis Javier, 30008 Murcia (ES)
(72) Inventor: Fabregas Gonzalez, Luis Javier, 30008 Murcia (ES)
(74) Representative: Naranjo Marcos, Maria Antonia
(86) International application number: PCT/ES2000/000492
(87) International publication number: WO 2001/053220

(56) References cited:
- EP-A2- 0 586 805
- WO-A1-96/25366
- ES-T3- 2 050 909

## Description

The present invention relates to the art sector related with sewage water treatment systems and plantation of green areas.

This invention is related to the present developed techniques for tertiary treatment of sewage waters by means of infiltration - percolation in permeable layers , as well as for cultivation of agricultural , sportive and leisure areas by means of underground drip-feeders.

Prior state of art related to water treatment systems, show devices for surface supply of liquid to the layers (essentially flow and sprinkling) without possible complementary use of the layer surface for green areas plantation. In confrontation with the state of art relative to green areas irrigation by means of underground drip-feeders, the present invention incorporates the complementary use of the same as sewage waters treatment plant, thus recovering the mayor part of the water used.

The technique used in the so called " green filters" is on the contrary, characterised by the use of superficial supply devices and the use on the same ground as natural depuration system, without possibility to directly recover the treated water and neither to use the irrigated surface as green profitable area.

As prior art state documents , we may quote ES-A-2050909 on which a procedure for treatment of sewage waters and polluted gasses coming from hothouse is shown, for which it is necessary to cover the surface of the denominated "earth layer reactor " by means of a structure of transparent roof and walls, in such a way toxic gasses coming from the bottom of the reactor can be recovered by this structure without human or environmental affection. In opposite, in the Symbiotic Sewage Water-treatment Plant the cultivations established over the layer surface of the treatment plant do not require to be covered as they are developed in totally healthy environment (without any gasses, aerosols, smell or mud) and therefore fully compatible with any human activity either to obtain an agricultural productivity or for sport, leisure or environmental activities which are totally unviable according to Patent 2050909.

For all these reasons, the " Photosynthetic harvest" described in document ES-A-2050909 has got no productive character and its plantation is done only in order to improve the aesthetic and treatment of sewage waters, being useful only a very small varieties of vegetal species , which is the contrary to what occurs in the present invention on which the broad list of types or harvests that can be established play a essentially economical role, increasing considerably the worth of the depurated surface.

Finally in case of document patent ES-A-2050909, the cultivation is made directly over the same infiltration layer , while in the present invention, the plantation is effected over a special substratum, independent to the same treatment system or infiltration layer, which humidity rises by capillarity, from the drip-feeder net that supplies the referred layer.

In relation with WO-A-9625366, this document describes an apparatus or device featured by two cameras, one is central and filled with a porous material, with different profiles and grain sizes, making a current of sewage water ascending from the base until the surface pass trough the camera, which originates complete flood of the camera, that actuates as a biological reactor. Water flowing through this first camera falls, due to gravidity into a second camera that is described round the first one and that is provided with several containers or lateral pots on which it is possible to cultivate plants. The fundamental differences of these documents of the state of art in respect of the present patent, are that, on the first one the treatment is made by means of a double camera apparatus and not over the same surface. Sewage water is applied to the inside of the first camera by means of an underwater flood system. In this proceeding, anaerobic conditions dominate (absence of air in the depuration) which conditions the treatment on a contrary way to the one in the present invention. Another main difference is to be noted in relation with the harvest, as on document WO-A-9625366 the plantation is made over the walls of an apparatus with the scope to contribute to the depuration and also the beautifying of said apparatus and not over the ground , this conditions the kind of plantation, as well as the activities and the profitability of the system which are very different to the ones existing on the present invention.

Finally the state of art shows existence of document EP-A-0586805 on which a proceeding featured by the existence of a watertight compartment which is full with filtrating sand to which sewage water is supplied on a similar way as described before , which equally causes a flood and layer saturation which allow only the cultivation of water plants over the surface . The main differences in relation with the present invention consist in that sewage water is supplied to the layer by means of devices very different to the underground drip-feeder used in the present invention . Furthermore, the sandy layer flood causes internal flows and anaerobic conditions that establish a kind of depuration which is completely different to the one which takes place on the present invention. Finally , over the flood layer of EP-A-0586805 only water plants can be cultivated , creating an unhealthy area, unsuitable for the activities and productive process that are completely possible over the cultivation areas designed under the symbiotic sewage water treatment plant. Studying the documents of the prior art state , we must conclude that in all these precedents, cultivation have got an accessory character which is focused mainly to minimize the environmental impacts of the flooded areas as well as for contributing to the same sewage waters treatment process but being incompatible with the type of green areas cultivation that are developed according to the present invention.

The present invention relates to a symbiotic sewage water treatment plant combining in the same physical area, sewage water treatment with simultaneous generation of profitable green areas such as for example;Golf courses, sport yards, gardens, greenhouses, leisure areas and agriculture fields, by infiltration of sewage water coming from a primary or secondary treatment plant (1), through a sand, gravel or other similar detritus material layer (3), as well as by plantation of such green areas of the surface of the layer, in which sewage waters are applied by means of underground drip-feeders (4) placed directly or indirectly over the infiltration layer, creating a capillary, slow descendent water flow (percolation) that originates an unsaturated environment on which biological water depuration takes place. The Symbiotic sewage water treatment plant can incorporate over the mentioned irrigation devices a sandy or similar substratum, specially destined to take root of any kind of vegetation, that absorbs by capillarity humidity ascending from the infiltration layer.

In confrontation with prior art , the present invention manages to harmonize two opposed activities, one consisting on quality resources generation (treatment plant) and other related with water consumption ( cultivation or plantation of green profitable areas), showing the following advantages that are now enounced with a non limitative character ;
- The underwater irrigation device used (drip-feeder) achieves a big increase of hydraulic efficiency of the treatment system (without water loose because of evaporation) despite its development in symbiosis with a green area .
- Improvement of the depuration parameters, due to the horizontal distribution and dosage of the sewage water which is more accurate to the essential features of the depuration systems by means of infiltration-percolation.
- The symbiotic treatment plant does not cause floods of non treated waters, nor aerosols or smells and accordingly avoids social rejection which is a feature of other water treatment systems.
- Allows plantation of new green profitable areas with sportive, agricultural, leisure or aesthetic scopes in areas on which nowadays it was not possible , due to the water resources lacks. Also incorporates a great economical potentiality to sewage water treatment that, until the present invention were exclusively featured by the environmental advantages.

With the scope of a better understanding of the present invention , drawing sheets are enclosed showing the following figures ;

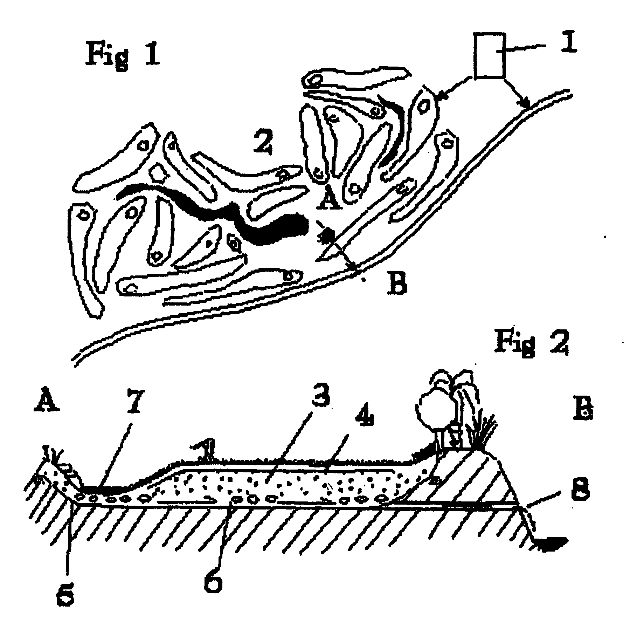

- Figure 1 shows a plant view of a sample of performance of the present invention on, which sewage waters of a primary or secondary treatment plant (1) are treated on a symbiotic sewage water treatment plant (2), in the present case, in association with a golf course.
- Figure 2 shows a side cut view of the ground in section A-B marked of the preceding figure.

According to the present invention on a same physical area are combined simultaneously, sewage water treatment with green usable areas generation, such as for example golf courses, or yards for other kind of sports, gardens, leisure green areas, children parks or agricultural cultivations.

Allowing symbiosis between two antagonistic activities such as depuration and cultivation, on a symbiotic sewage water treatment plant (2), the water to depurate, originated from a primary or secondary treatment plant (1) infiltrates through a layer (3) formed by sands, gravels or any other kind of very permeable detritus materials, using underground drip-feeders (4) placed over the referred layer surface.

Sewage waters coming from underground drip-feeders percolate with a capillary , descendent flow through permeable materials, until reaching the impermeable base (5) that can be performed by means of any of the existing proceedings in the current state of art . In an alternative performance of the present invention (not shown), the layer (3) is not isolated from the ground, therefore allowing treated water to filtrate with low overcharge rates due to the broad area occupied by the layer in relation with the infiltrated volume.

All every moment , the layer (3) remains unsaturated with water, that is to say, in presence of air so that sewage waters can be treated in aerobic conditions. In order to ease these circumstances , very permeable materials will be used in layer construction, causing an underground water flow (6) and its free exit (7) and (8) towards the lower points of the layer, thus avoiding water from accumulating and saturating the intergranular spaces .

Above the percolation layer and the mentioned underground drip-feeders, a sandy or similar substratum which is particularly destined to ease the take root of any kind of cultivation is incorporated , in order to try and obtain an economical profit of big areas that require treatment systems denominated filtration-percolation type and that, until the present invention were not possible to perform basically due to use of superficial irrigation devices, more particularly sparkling and flood that unable agricultural, sportive , leisure or commercial use of the ground. That is to say, it is not possible to irrigate a surface with sewage waters by means of surface irrigation devices or systems, if it is intended to obtain, at the same time, any profit, using the area for any human activities as the above mentioned with the necessary warranties for human health.

This take root substratum, that on figure number 2 can be notices over the irrigation devices (4), absorbs humidity from the layer that ascends by capillarity, not being therefore necessary in most of the cultivation , the use of other specific means for complementary irrigation of the green areas.

With treated waters, it is possible to originate courses and open sky lakes (7) on which it is possible to cultivate and develop every kind of flora and water fauna that, in combination with sun ultraviolet radiations, contribute even more to the sewage waters depuration, increasing the economical and environmental value of the symbiotic sewage water treatment plant ambience.

## Claims

1. Symbiotic sewage water treatment plant combining in the same physical area, sewage water treatment with simultaneous generation of profitable green areas such as for example Golf courses, sport yards, gardens, greenhouses, leisure areas and agriculture fields, by infiltration of sewage water coming from a primary or secondary treatment plant (1), through a sand, gravel or other similar detritus material layer (3), as well as by plantation of such green areas of the surface of the layer, in which sewage waters are applied by means of underground drip-feeders (4) placed directly or indirectly over the infiltration layer, creating a capillary, slow descendent water flow (percolation) that originates an unsaturated environment on which biological water depuration takes place.

2. Symbiotic sewage water treatment plant according to claim 1, incorporating over the mentioned irrigation devices a sandy or similar substratum, specially destined to take root of any kind of vegetation, that absorbs by capillarity humidity ascending from the infiltration layer.

## Revendications

1. Station d'épuration symbiotique de traitement des eaux résiduaires qui combine, dans un même espace physique, le traitement des eaux résiduaires et la génération simultanée de zones vertes exploitables telles que des greens de golf, des terrains de sport, des jardins, des maisons vertes, des zones de loisirs et des cultures agricoles, à l'aide d'infiltrations d'eaux résiduaires provenant d'une station de traitement primaire ou secondaire des eaux résiduaires (1) au moyen d'une couche de matériau détritique (3) comme le sable, les graviers ou matériaux similaires, ainsi qu'à travers des plantations de ces zones vertes de la superficie de la couche dans laquelle les eaux résiduaires sont appliquées par des dispositifs souterrains (4) situés directement ou indirectement sur la superficie d'infiltration, créant ainsi un flux d'eau descendant, lent et capillaire (percolation), qui engendre un milieu insaturé dans lequel se produit l'épuration biologique de l'eau.

2. Station d'épuration symbiotique des eaux résiduaires conforme à l'exigence 1, qui comprend, sur les dispositifs d'irrigation susmentionnés, un substrat sablonneux ou similaire spécialement destiné à l'enracinement de n'importe quel type de végétation absorbant par capillarité l'humidité remontant à partir de la couche d'infiltration.

## Patentansprüche

1. Symbiotische Kläranlage zur Behandlung von Abwässern, welche gleichzeitig auf demselben Raum die Behandlung von Abwässern mit der Erhaltung von Grünflächen wie z.B. Golf- und Sportplätzen, Gärten, grünen Häusern, Naherholungsgebieten und landwirtschaftlichen Anbauflächen kombiniert, und zwar mittels Filtration von Abwässern, die zuvor eine Kläranlage erster oder zweiter Behandlung durchlaufen haben (1), mittels einer Lage detritischen Materials (3), wie z.B. Sand, Schotter oder ähnlichen Materialien, sowie mittels Bepflanzungen besagter Grünflächen der Oberflächenschicht, in welcher die Abwässer durch unterirdische Vorrichtungen verteilt werden (4), die sich direkt oder indirekt auf der Filtrationsfläche befinden und einen absteigenden Wasserfluss bilden, der durch langsame Kapillarbewegung (Diffusion) ein ungesättigtes Medium bildet, in welchem die biologische Klärung des Wassers stattfindet.

2. Symbiotische Kläranlage zur Behandlung von Abwässern gemäß Anforderung 1, welche auf den genannten Bewässerungs-Vorrichtungen ein sandiges oder ähnliches Substrat aufbringt, und welche speziell darauf ausgelegt sind, die Verwurzelung jedweder Vegetation zu fördern, welche durch Kapillarbewegung diejenige Feuchtigkeit absorbiert, die aus der Filtrationsschicht aufsteigt.
